# EUROPEAN PATENT APPLICATION

(11) **EP 0 557 838 A1**
(43) Date of publication of application: **01.09.1993**
(21) Application number: 93102306.3
(22) Date of filing: 15.02.1993
(51) Int. Cl.: B29C 63/28, B29C 63/34, F16L 55/165

(54) **Process for carrying out repairs of already installed manufactured articles for conveying and/or containing fluids, such as pipings, piping lengths, tanks, reaction columns and the like, and the relevant equipment**

(30) Priority: 27.02.1992 IT MI920427
(71) Applicant: IN.TEC S.r.l., I-20124 Milano (IT)
(72) Inventor: Criffo', Franco, c/o IN. TEC S.r.l., I-20124 Milano (IT)
(74) Representative: Trupiano, Roberto

(57) **Abstract**

A process for carrying out repairs, reinforcements or protections in general of already installed manufactured articles, for conveying or containing fluids, such as pipings, piping lenghts, cylindrical containers, tanks and the like, consisting in inserting in the manufactured article to be repaired a fabric tubular sheath open on both ends, pre-impregnated with a polymerizable liquid resin, and a tubular sheath of an elastically deformable material closed on one end and with the opposite end connected to a flexible duct; in introducing into the deformable sheath a fluid, in such a way as to generate a pressure suitable to cause the adhesion of the fabric sheath to the internal surface of the manufactured article and the polymerization of the resin; and in extracting lastly the elastic sheath.

The equipment comprises the two sheaths and the means for their preservation, insertion and installation.

## Description

Object of the present invention is a process for lining with impermeabilizing materials and/or corrosion-proof, abrasion-proof materials and the like, manufactured articles for conveying and/or containing fluids, such as pipings, piping lenghts, tubular containers, tanks, reservoirs, columns and the like, in order to execute repairs, reinforcements or protections in general, on already installed manufactured articles, without having to resort to the demounting and temporary removal of the manufactured articles to be lined.

Another object of the present invention is the equipment suitable for carrying out the above process.

It is well known that pipings are utilized to convey fluids in movement, forming a real route in which any fluid (liquid, gas or steam) or mixtures of powders or gases or even solid materials (penstocks, aqueducts, sewerages, methane pipelines, oil pipelines, steam ducts, pipings for conveyors of granulates, for pneumatic dispatch, etc.) are caused to flow.

At present, when in an already laid piping a breaking occurs, for instance a crack or a partial detachment of a joint or the like, to carry out the repair and to restore the continuity of the piping, the latter has to be demounted and the broken length has to be either substituted or repaired, then remounted; when the piping length to be repaired is located in places whose access is difficult, for instance in case of pipings for air conditioning plants, or pipings for conveying gases or fluids in houses or industrial plants, or when the length is laid underground or buried in building works, as is the case with sewage ducts, downspouts and the like, to effect the repair or substitution of the damaged length, one has to resort to special scaffoldings or excavations or even the demolition of the part of building work where the length to be repaired is buried, followed by restoration works once the repair or substitution has been carried out. The same problem arises when the repair is to be executed in an underground reservoir or a tank or a reaction column and the like. This obviously involves high costs and severe drawbacks of various type, due to the amount of work to be executed and the stoppage and non-utilization of the plant to which the manufactured article in question pertains.

A purpose of the present invention is to realize a process for carrying on the repair of already laid manufactured articles, such as pipings, underground ducts, reservoirs, tanks, longitudinal flow reactors and the like, for conveying and/or containing fluids, gases, powders, etc., which does not involve the demounting and/or temporary removal of the length or sector of manufactured article to be repaired, and in particular the exposure of the manufactured article when the latter is either laid underground or buried in building works, and which is easily and quickly performable, to low costs.

Another purpose of the present invention is to realize a process for reinforcing already laid piping length, to lend more resistance to lengths that are particularly subject to corrosion or abrasion, such as for instance in correspondence of bends, elbows and the like, and when in the conveyed fluid solid and abrasive particles are present in suspension.

Still another purpose of the present invention is to realize a process for increasing the thickness and therefore the mechanical resistance of lengths or sectors of manufactured articles, either because the thickness of the wall has proved to be too thin in the practice, or because a given length of the manufactured article has been submitted to conditions of especially heavy mechanical strain.

Still a further purpose of the invention is to provide the equipment or apparatus suitable to realize a process for executing repairs of already laid manufactured articles for conveying or containing fluids, and/or for reinforcing length of said manufactured articles and for increasing their thickness, without having to resort to demounting or temporary removing the manufactured article sector to be repaired.

These and still other purposes and relating advantages which will be more clearly stressed by the following description are obtained with a process for carrying out the repair, reinforcement or protection in general of manufactured articles for conveying or containing fluids, such as pipings, piping lengths or sectors, reservoirs, tanks, longitudinal flow reactors and the like, which process, according to the present invention, comprises the following stages:
- into a tubular fabric sheath open on both ends and whose length is at least equal or longer than the length of the sector of the manufactured article to be repaired or protected, and whose section perimeter is at least equal or slighltly greater than the perimeter of the cross section of the manufactured article, a tubular sheath of elastically deformable material in inserted, closed on one end and whose other end is connected to a flexible duct, and having a length longer than the length of said fabric sheath, so as to come out from both ends of the latter, and whose section perimeter is almost equal to the section perimeter of said fabric sheath,
- said fabric sheath in which said sheath of elastically deformable material is now inserted is uniformly and homogeneously impregnated with a resin in polymerizable liquid form;
- the element constituted by said fabric sheath impregnated with said polymerizable resin and by said sheath of elastically deformable material inserted in said impregnated fabric sheath, suitably folded and kept folded by means of easily detacheable holding means, is inserted into the manufactured article and placed in correspondence of the length or sector to be repaired or reinforced;
- in said sheath of elastically deformable material, air or some other suitable fluid is then introduced through said flexible duct communicating with the outside of said manufactured article, in order to generate a pressure such as to cause said deformable material sheath to expand, causing the detachment of said holding means, and said impregnated fabric sheath to perfectly adhere to the surface of said manufacturd article length to be reinforced, said air or said other suitable fluid being kept in pressure within said sheath until completion of the polymerization and the ensuing hardening of said resin;
- said air or said other fluid are then extracted from said deformable sheath so as to generate within the latter a depressure such as to cause said deformable sheath to shrink or contract, detaching from the protection lining created and constituted by the composite fabric/polymerized resin layer;
- said deformable sheath is then extracted from the manufactured article and, in case, recovered.

The process according to the present invention may be advantageously utilized for any type of manufactured article for conveying and/or containing fluids, in particular pipings or reservoirs of any form and size, by suitably chosing the size of the tubular fabric sheath and the deformable sheath, as well as the type and characteristics of the polymerizable resin.

The process may be used for a manufactured article having circular or elliptic, or also square, polygonal, etc. cross section and for thin- or thick walled pipings. Pipings and manufactured articles in general may be constituted of material of any type, for instance metals such as steel, aluminium, copper or lead, concrete mix, gres, fired-clay and thermo-setting resins armored or reinforced with textiles, fiberglass, etc.

Besides, pipings may also have a very winding development, as the element constituted by the sheaths is inserted and caused to slide inside the piping in a folded and compact form, resorting to techniques similar to those used for making electrical cables pass through their special ducts. In some cases, if the type of intervention should so require, a localizing device, for instance a suitable sensor or a small telecamera or the like, may be associated to the element kept folded during the positioning in the piping, in order to find out exactly the pipe sector or length where said element is to be placed, said localizing device being thereafter extracted and recovered before the stage of air introduction into the deformable sheath. The holding means used to keep folded and compact the element constituted by the two sheaths while said element is introduced and placed within the manufactured article, may be advantageously constituted by thin fragile yarns of wool or other fabric, which are easily broken by the pressure generated within the deformable sheath by the fluid inlet; or else, said holding means may be constituted by glueing points or other equivalent systems.

The impregnation of the fabric sheath with polymerizable resin is made by immersion of the fabric sheath in the liquid state resin, before introducing in it the deformable sheath, or by immersion of the fabric sheath already containing the deformable sheath either before of after the folding, depending on the sizes of the sheaths and the characteristics of the resin. Impregnation may be also carried out by buttering, spraying, and the like.

To make then easier the detachement and the extraction of said deformable sheath from the protection lining once this has formed, the external surface of said elastically deformable sheath may be advantageously covered with a stripping substance, such as, for instance, silicone oil or the like, before inserting said deformable sheath within said fabric sheath.

Always according to the present invention, the elastically deformable sheath may be made of any elastic material, such as natural or synthetic rubber, for instance butadiene or any other type of elastomer, provided that it is incompatible and inert towards the polymerizable resin which is utilized to impregnate the fabric sheath.

As polymerizable resin a thermo-setting plastic material is preferably utilized, which, as known, after an initial plasticity stage, undergoes over time and, if necessary, under the effect of heat, an irreversible chemical modification or reticulation which makes it permanently unmeltable and rigid. Such plastic material is chosen particularly in function of the type and the characteristics of the manufactured article to be lined, among the group comprising phenolic resins, urea-formaldehyde, melamina-formaldehyde and amino resins in general, alkyd and polyester resins, epoxy resins and polyurethanes. In some cases, thermoplastic resins may also be used, provided that they have a softening point higher than the temperature at which the reinforced manufactured article is to be used.

As said, a pressure is created within the elastically deformable sheath of the element placed in the manufactured article such as to cause the liquid-state-resin-impregnated fabric sheath to perfectly adhere to the inner surface of said manufactured article. Such process also permits to obtain, thanks to the pressure exerted by the smooth surface of the elastically deformable sheath, in condition of expansion, on the fabric sheath in contact with the manufactured article's inner surface, a smooth lining, without roughnesses and bulges. This ensures that the flow of the fluid in movement in the repaired duct and in particular in case of solid material flow, for instance in sewages, pipings for the conveying of granulates and the like, is not obstructed by said roughnesses, eliminating in this way possible phenomena of local friction, due to the presence of bulges and/or roughnesses on the surface, which might form during the repair of the manufactured article; such roughnesses, besides slowing down the regular flow of the fluid, may cause the formation of cavitations and/or primers which, in the long run, would become a source of drawbacks and even damages.

The type of fluid suitable for putting in pressure said elastically deformable sheath, and which may be constituted either by air or a diathermic liquid or the like, is opportunely chosen in function of the type of sheath and polymerizable resin utilized.

In order to help/and or accelerate the polymerization of the resin, said fluid may be heated and brought to a suitable temperature, either by heating the fluid before introducing it in said duct connected to the end of said elastically deformable sheath, or by means of a resistor or any other suitable heating device, priorly introduced in the deformable sheath and connected, through the same duct connected to the end of the sheath, to a device known to the art, suitable to supply the energy necessary for heating the fluid and keeping the necessary temperature for the whole duration of the polymerization.

The sheath is made of a fabric obtained with fibers of any natural material, such as cotton and wool, or syntetic or mixed material.

If lining are to be obtained having special resistance characteristics, polyamid material fibers may for instance be used, in particular aramidic fibers, such as KEVLAR, fiberglass, carbon fibers, etc.

The equipment suitable for carrying out, according to the present invention, the process for lining manufactured articles for conveying and/or containing fluids, such as pipings, pipings lengths, reservoirs and the like, comprises:
- a tubular fabric sheath, open on both ends and whose length is at least equal or longer than the lenght of the manufactured article sector to be protected, and whose section perimeter is at least equal or slightely greater than the perimeter of the cross section of said manufactured article , uniformly and homogeneously impregnated with a liquid-state thermo-setting resin;
- a tubular sheath of an elastically deformable material closed on one end and with the opposite end connected to a flexible duct, possibly covered with stripping materials, inserted into said impregnated fabric sheath and whose length is longer than the length of said fabric sheath, so as to come out from both ends of the latter, and whose section perimeter is about equal to the section perimeter of said fabric sheath;
- easily detacheable holding means, suitable for keeping in folded and compact form the element constituted by said fabric sheath impregnated with polymerizable liquid resin and by said deformable sheath inserted in said fabric sheath;
- containers and refrigerators suitable to keep said element at a temperature lower than the starting temperature of polymerization of the resin, and possibly not in touch with air and therefore fit for preserving and transporting said element until it has reached the place and time of utilization;
- a fluid such as air, diathermic fluid or the like, suitable to be introduced in said deformable material sheath through said duct connected to its end and suitable to generate a pressure within said deformable material sheath;
- means for heating and keep in temperature said fluid to be introduced or already introduced in said deformable sheath.

Obviously, in the practical accomplishment, to the invention as above disclosed according to a preferential, but not to be construed as exclusive practical embodiment, changes and variants may be added whose structure and functions are equivalent, without overcoming the protection field of the invention.

## Claims

1. A process for executing repairs, linings, protections in general of manufactured articles for conveying and/or containing fluids, such as pipings or piping lengths, tanks, longitudinal flow reactors and the like, characterized in that it comprises the following stages:
- into a fabric tubular sheath open on both ends and whose length is at least equal or longer than the length of the manufactured article sector to be repaired or protected, and whose section perimeter is at least equal or slightly greater than the perimeter of the manufactured article cross section, a tubular sheath of elastically deformable material is inserted, having a closed end and with the opposite end connected to a flexible duct, and whose length is longer than the length of said fabric sheath, so as to come out from both ends of the latter, and whose section perimeter is almost equal to the section perimeter of said fabric sheath,
- said fabric sheath, in which said sheath of elastically deformable material is inserted, is uniformly and homogeneously impregnated with a liquid-state polymerizable resin,
- the element constituted by said fabric sheath impregnated with said polymerizable resin and by said sheath of elstically deformable material inserted into said impregnated fabric sheath, suitably folded and kept folded by easily detacheable holding means, is inserted into the manufactured article and positioned in correspondence with the length or sector to be repaired or reinforced,
- in said elastically deformable sheath is introduced, through said flexible duct placed in communication with the outside, air or other fluid suitable to generate such a pressure as to cause said deformable material sheath to expand, said holding means to detach, and said impregnated fabric sheath to perfectly adhere to the surface of said manufactured article length to be reinforced, said air or said other suitable fluid being kept in pressure within said sheath until completion of the polymerization and the ensuing hardening of said resin,
- said air or said other fluid are then extracted from said flexible sheath, so as to generate within the latter such a depressure as to cause said deformable sheath to shrink or contract detaching from the protection lining created and constituted by the fabric/polymerized resin composite layer,
- said deformable layer is then extracted from the piping and, in case, recovered.

2. A process according to claim 1, characterized in that said manufactured articles have a circular or elliptic or square or polygonal cross section, and are constituted by a material such as aluminium, steel, copper, lead, concrete mix, gres, fired-clay, thermo-setting resins even armored or reinforced with textiles, fiberglass or other known reinforcing materials.

3. A process according to claim 1, characterized in that said element constituted by said impregnated fabric sheath and said deformable sheath inserted in said fabric sheath, is inserted and caused to slide within said manufactured article in folded and compact form with techniques similar to those utilized to make electrical cables pass through the ducts, and using sensors, telecameras or other suitable localization means associated to said element to position exactly the element in the manufactured article.

4. A process according to claim 1, characterized in that said holding means for keeping in folded and compact form said element are constitutes by wool yarns or glueing points easily detacheable under the action of the pressure exerted within said deformable sheath.

5. A process according to claim 1, charaterized in that said deformable material sheath is pre-covered with a suitable stripping substance, such as silicone oil or the like.

6. A process according to claim 1, characterized in that, in order to help and/or accelerate the polymerization and hardening of said polymerizable resin, said fluid is heated and brought to a suitable temperature, by either heating the fluid before its introduction into said duct connected to said elastically deformable sheath, or by means of a resistor or other expedient heating device priorly inserted into the deformable sheath and connected, through the same duct, to a suitable device of a known type, suitable to supply the energy necessary for heating the fluid and keeping the necessary temperature for the whole duration of polymerization.

7. A process according to claim 1, characterized in that said liquid-state polymerizable resin is a thermosetting resin, and is chosen among the group comprising phenolic resins, urea-formaldehyde, melamina-formaldehyde and amino resins in general, alkyd and polyester resins, epoxy resins and polyurethanes.

8. A process according to claim 1, characterized in that said fabric utilized for realizing said fabric sheath is made of natural fibers, such as cotton, wool, and the like, or synthetic fibers or mixed fibers.

9. The equipment for carrying out the process for lining manufactured articles for conveying and/or containing fluids, such as pipings, piping lenths, tanks and the like according to claim 1, characterized in that it comprises:
- a tubular fabric sheath, open on both ends, and whose length is at least equal or longer than the length of the section of manufactured article to be protected, and whose section perimeter is at least equal or slightly greater than the perimeter of the cross section of said manufactured article , uniformly and homogeneously impregnated with a liquid-state thermo-setting resin;
- a tubular sheath of elastically deformable material, closed on one end and with the opposite end connected to a flexible duct, possibily covered with stripping materials, inserted into said impregnated fabric sheath, and whose length is longer than the length of said sheath, so as to come out from both ends of the latter, and whose section perimeter is almost equal to the section perimeter of said fabric sheath;
- easily detacheable holding means suitable to keep in folded and compact form the element constituted by said sheath of fabric impregnated with liquid polymerizable resin and said deformable resin inserted into said fabric sheath;
- containers and refrigerators suitable to preserve said element at a temperature lower than the starting temperature of polymerization of the resin, and possibly not in touch with air, and therefore suitable for the preservation and transport of said element until it has reached the time and place of use;
- a fluid such as air, diathermic fluid or the like, suitable to be introduced in said deformable material sheath through said duct connected to its end and suitable to generate a pressure within said deformable material sheath;
- means to heat and keep at the necessary temperature said fluid to be introduced or already introduced in said deformable sheath.
